# EUROPEAN PATENT APPLICATION

(11) **EP 4 451 423 A1**
(43) Date of publication of application: **23.10.2024**
(21) Application number: 23787416.9
(22) Date of filing: 28.02.2023
(51) Int. Cl.: H01M 10/48, H01M 50/505, H01M 50/514, H02J 7/00

(54) **POWER SUPPLY APPARATUS AND ELECTRIC APPARATUS**

(30) Priority: 14.04.2022 CN 202220864296 U
(71) Applicant: Contemporary Amperex Technology (Hong Kong) Limited, Central, Central And Western District (HK)
(72) Inventor: WANG, Chong, Ningde, Fujian 352100 (CN); CHEN, Qicai, Ningde, Fujian 352100 (CN); ZHENG, Chenling, Ningde, Fujian 352100 (CN); CHEN, Zhiming, Ningde, Fujian 352100 (CN)
(74) Representative: Ziebig Hengelhaupt Intellectual Property Attorneys Patentanwaltskanzlei PartGmbB
(86) International application number: PCT/CN2023/078738
(87) International publication number: WO 2023/197768

(57) **Abstract**

The present disclosure relates to a power supply device and a power consumption device, which belongs to the technical field of manufacturing power supply devices. The present disclosure provides a power supply device, including: at least one power supply part, wherein each of the power supply parts is provided with at least one battery cell; and a temperature acquisition module, which includes a support frame and a temperature acquisition unit, wherein the support frame is configured to fix the temperature acquisition module relative to the power supply part, and the temperature acquisition unit is arranged on the support frame and the temperature acquisition unit is configured to be thermally connected to the power supply part to acquire information relative to temperature of the power supply part, wherein the support frame is integrally molded with the temperature acquisition unit. The power supply device is simple to be assembled and is of compact structure, and has higher energy density. The present disclosure further provides a power consumption device including the power supply device.

## Description

### Cross-reference to Related Applications

The present disclosure claims priority to Chinese patent Application No. 202220864296.1, filed with the Chinese Patent Office on April 14, 2022, entitled "Power Supply Device and Power Consumption Device", the entire contents of which are incorporated herein by reference.

### Technical Field

The present disclosure relates to the technical field of manufacturing power supply devices, and specifically relates to a power supply device and power consumption device.

### Background Art

With the continuous prosperity of the new energy vehicle market, the power battery industry expands and grows rapidly, and the lithium battery technology becomes more and more sophisticated, which puts higher and higher requirements on the assembly process of the power battery. A plurality of indexes are required to consider during the assembly process of the power battery, such as simplicity, compactness of structure, manufacturing cost of components inside the power battery, etc. How to reach a balance between the indexes becomes a standard to judge whether the assembly process level of the power battery is good or bad.

However, most of the power batteries are mainly considered the manufacturing costs of components when assembled, which leads to defects of complex assembly and loose structure thereof.

### Summary

In view of this, the present disclosure provides a power supply device and power consumption device, which is simple to be assembled, and is of compact structure with a higher energy density.

Embodiments of the first aspect of the present disclosure provide a power supply device, including: at least one power supply part, wherein each of the power supply parts is provided with at least one battery cell; and a temperature acquisition module, including a support frame and a temperature acquisition unit, wherein the support frame is configured to fix the temperature acquisition module relative to the power supply part, wherein the temperature acquisition unit is arranged on the support frame and the temperature acquisition unit is configured to be thermally connected to the power supply part to acquire information relative to temperature of the power supply part, wherein the support frame is integrally molded with the temperature acquisition unit.

In the power supply device of the embodiments of the present disclosure, the support frame of the temperature acquisition module is integrally molded with the temperature acquisition unit, so that the temperature acquisition module is not easy to disintegrate during the process of assembling and molding the power supply device, thereby reducing a difficulty of assembling the power supply device, shortening the assembly duration of the power supply device, and improving the assembly efficiency of the power supply device.

According to some embodiments of the present disclosure, the temperature acquisition unit includes: a temperature sensing part, configured to acquire the information relative to temperature of the power supply part, and convert the information relative to temperature into an electrical signal and transmit the electrical signal, wherein the temperature sensing part is configured to be thermally connected to the power supply part.

In the above solution, the temperature sensing part is thermally connected to the power supply part to acquire the information relative to temperature of the power supply part.

According to some embodiments of the present disclosure, the support frame is provided with an insertion and connection part; the insertion and connection part is electrically connected to the temperature sensing part; and the insertion and connection part is configured to be able to be detachably connected to an acquisition component for acquiring the information relative to temperature.

In the above solution, the acquisition component is inserted into the insertion and connection part by way of inserting and pulling out, and is electrically connected to the temperature sensing part, which is not only easy to be assembled, but also the acquisition component can acquire the electrical signal converted by the temperature sensing part according to the information relative to temperature.

According to some embodiments of the present disclosure, the temperature sensing part includes a thermosensitive part and electrical connection terminals, wherein the thermosensitive part is configured to convert the information relative to temperature into the electrical signal, and the electrical connection terminal is connected to the thermosensitive part and configured to transmit the electrical signal.

In the above solution, the electrical connection terminal is configured to connect to the thermosensitive part. The acquisition component is inserted into the insertion and connection part and then electrically connected to the thermosensitive part by the electrical connection terminal to acquire the electrical signal converted according to information relative to temperature.

According to some embodiments of the present disclosure, the temperature sensing part includes a protective connection member, wherein the protective connection member is configured to limitedly fix the thermosensitive part on the support frame.

In the above solution, the protective connection member limitedly fixes the thermosensitive part on the support frame, which not only fixes a relative position of the thermosensitive part and the support frame, but also provides a protective effect for the thermosensitive part, thereby reducing the possibility that the thermosensitive part is damaged by external forces, and improving the reliability of the temperature acquisition module.

According to some embodiments of the present disclosure, the protective connection member includes a protective part and a reinforcement part, wherein the protective part is integrally molded with the support frame and accommodates the thermosensitive part; the reinforcement part cooperates with and is detachably connected with the protective part; and the reinforcement part is configured to reinforce a connection strength of the acquisition component that is detachably connected to the insertion and connection part.

In the above solution, the protective part is integrally molded with the support frame, so that the temperature acquisition module is not easily disassembled during the process of assembling and molding the power supply device, thereby reducing the difficulty of assembling the power supply device; and the reinforcement part is configured to reinforce the connection strength of the acquisition component and the support frame, so that the acquisition component can acquire the electrical signal converted based on the information relative to temperature.

According to some embodiments of the present disclosure, the power supply device includes: a signal processing part, which is configured to be able to receive the electrical signal and analyze a temperature condition of the power supply part according to the electrical signal; and a signal acquisition part, which is configured to be electrically connected to the signal processing part, wherein the signal acquisition part is the acquisition component, and the signal acquisition part is configured to acquire the electrical signal and transmit it to the signal processing part.

In the above solution, the signal acquisition part is connected to the signal processing part, wherein the signal acquisition part can transmit the acquired electrical signal converted according to the information relative to temperature to the signal processing part, and the signal processing part analyses the temperature condition of the power supply part to ensure a safe operation of the power supply device.

According to some embodiments of the present disclosure, a busbar component is arranged on the power supply device, wherein the busbar component is configured to converge currents between the power supply parts and/or the battery cells, and the signal acquisition part is inserted into the insertion and connection part along a direction parallel to a surface of the busbar component.

In the above solution, the direction that the signal acquisition part inserts into the insertion and connection part is parallel to the surface of the busbar component, which can reduce one side of the space that the busbar component departs away from the battery cell occupied by the signal acquisition part, so that the power supply device has a compact structure and higher energy density.

According to some embodiments of the present disclosure, the support frame includes a guiding part, wherein one end of the guiding part extends to the insertion and connection part and the other end extends to an edge of the support frame, wherein the guiding part is configured to guide the signal acquisition part to be inserted into the insertion and connection part along a direction parallel to the surface of the support frame.

In the above solution, the guiding part can guide the signal acquisition part to insert into the insertion and connection part, so that the signal acquisition part is easily inserted into the insertion and connection part, so as to simplify the assembly process of the power supply device.

According to some embodiments of the present disclosure, one side of the temperature sensing part departing away from the battery cell is provided with an opening part, wherein the opening part is configured to expose a connection position of the thermosensitive part and the electrical connection terminal.

In the above solution, the opening part exposes the connection position of the thermosensitive part and the connection position of the electrical connection terminal. During the process of assembling and molding the temperature acquisition module, it can realize a preassembly for the thermosensitive part and the electrical connection terminal, and then the thermosensitive part and the electrical connection terminal are connected as an integral, which simplifies the assembly process of the temperature acquisition module.

According to some embodiments of the present disclosure, the power supply device further includes an insulator, and the insulator is configured to close the opening part.

In the above solution, the insulator is configured to close the opening part to package the thermosensitive part and the electrical connection terminal, which not only protects the thermosensitive part and improves the service life of the thermosensitive part, but also insulatively isolates the thermosensitive part from other components inside the power supply device, so that the thermosensitive part has a higher precision of temperature acquisition.

According to some embodiments of the present disclosure, the support frame includes a main body part and two end parts, wherein the main body part is connected to the two end parts, and the temperature acquisition unit is arranged on the main body part.

In the above solution, the temperature acquisition unit is arranged on the main body part, which not only leads the temperature acquisition unit to be located approximately at the middle of the support frame, so that the support frame is forced uniformly when the temperature acquisition unit is thermally connected to the power supply part, but also leads the support frame to be not easily warped, so that the temperature acquisition unit uniformly abuts against the surface of the power supply part, so as to have a better precision of temperature acquisition.

According to some embodiments of the present disclosure, an edge of the end part departing away from the main body part is provided with a positioning surface; the battery cell is provided with electrode terminals; and the positioning surface and an external peripheral surface of the electrode terminals are matched in shape and abut against each other.

In the above solution, the end parts abut against the external peripheral surface of the electrode terminal by the positioning surface, and the support frame abuts between the two electrode terminals by the two end parts, so that the position of the temperature acquisition module is easy to be fixed, which simplifies the assembly process of the power supply device, and also avoids the swaying of the temperature acquisition module relative to the battery cell.

According to some embodiments of the present disclosure, the power supply device includes the signal processing part, wherein the signal processing part is arranged on the surface of the power supply part, and the support frame includes: a first elastic part, wherein the first elastic part is arranged on the main body part, and the first elastic part elastically abuts against one side of the signal processing part departing away from the power supply part.

In the above embodiment, the main body part abuts the signal processing part against the surface of the power supply part by the first elastic part, which can help to fix the signal processing part and the power supply part, thereby simplifying the construction of the power supply device.

According to some embodiments of the present disclosure, one side of the main body part facing the power supply part is provided with an avoidance groove, wherein the avoidance groove is configured to avoid the signal processing part.

In the above embodiment, the one side of the main body part facing the power supply part is provided with the avoidance groove, which can increase the space between the surface of the main body part and the power supply part, so as to avoid electrical components arranged on the signal processing part.

According to some embodiments of the present disclosure, the power supply device is provided with the busbar component, wherein a limiting step is formed at a connection position of the main body part and the end part, and the limiting step is configured to abut against the edge of the busbar component.

In the above solution, the limiting step abuts against the edge of the busbar component when the end part of the support frame extends between the busbar component and the power supply part, which is not only easy to locate the position of the temperature acquisition module, so as to simplify the assembling process of the power supply device, but also the surface of the main body part departing away from the power supply part is higher than or flush to the surface of the busbar component departing away from the power supply part, so as to arrange the main body part by utilizing the space occupied in the thickness direction of the busbar component, so that the power supply device has the compact structure and higher energy density.

According to some embodiments of the present disclosure, the power supply device is provided with the busbar component, wherein the support frame further includes a second elastic part, and the second elastic part is arranged on the end part to elastically abut against the busbar component.

In the above solution, the end part elastically abuts against the busbar component by the second elastic part, which not only leads the end part to be easily inserted between the busbar component and the power supply part, but also can cushion the swaying of the temperature acquisition module caused by the power supply device in the working condition of turbulence and shock, so that the temperature acquisition unit can abut against the surface of the power supply part.

According to some embodiments of the present disclosure, the power supply device further includes: an insulating plate, which is arranged on the surface of the power supply part, wherein the end part of the support frame is inserted between the busbar component and the insulating plate. The end part is provided with a positioning hole, and a protrusion is formed on the surface of the insulating plate, wherein the protrusion is inserted into the positioning hole to fix the support frame between the busbar component and the insulating plate.

In the above embodiment, the insulating plate is arranged on the surface of the power supply part, which can realize that the end part of the support frame insulatively abuts between the surface of the busbar component and the power supply part; and the protrusion cooperates with the positioning hole, which can locate the position of the support frame and simplify the assembly process of the power supply device.

A second aspect embodiment of the present disclosure provides a power consumption device including the power supply device provided by the first aspect embodiment of the present disclosure, wherein the power supply device is configured to provide electrical energy.

The temperature acquisition module is non-detachable in the power supply device of some embodiments of the present disclosure, that is, the temperature acquisition module is not easy to be disassembled during the assembly process of the power supply device, so as to be easily and simply assembled. Therefore, the power consumption device of some embodiments of the present disclosure also has the advantage of easy and simple assembly of the power supply device thereof.

Additional aspects and advantages of the present disclosure will be partly given in the following description, and parts of them will become apparent in the following description or will be realized by the practice of the present disclosure.

### Brief Description of Drawings

In order to more clearly illustrate the technical solutions of the embodiments of the present disclosure, the drawings to be used in the embodiments will be briefly introduced below. It should be understood that the following drawings only show certain embodiments of the present disclosure, and therefore should not be regarded as a limitation of the scope. For persons of ordinary skill in the art, other relevant drawings can be obtained according to these drawings without inventive efforts.
FIG. 1 shows a simple schematic diagram of a vehicle in an embodiment of the present disclosure;
FIG. 2 shows an overall structure schematic diagram of a power supply device of a vehicle in FIG. 1;
FIG. 3 shows a partial structure schematic diagram of a power supply device of a vehicle in FIG. 1 (a box body is not shown);
FIG. 4 shows a partially enlarged diagram at A in FIG. 3;
FIG. 5 shows an explosion diagram of a temperature acquisition module of a power supply device in some embodiments of the present disclosure;
FIG. 6 shows a partially enlarged diagram at B in FIG. 5;
FIG. 7 shows a structure schematic diagram of a support frame and a protective connection member of an integral structure in a temperature acquisition module of a power supply device in some embodiments of the present disclosure;
FIG. 8 shows a structure schematic diagram that a temperature acquisition module is assembled with a signal acquisition part of a power supply device in some embodiments of the present disclosure;
FIG. 9 shows a sectional diagram in a C-C direction of FIG. 8; and
FIG. 10 shows a partially enlarged diagram at D in FIG. 8.

The above drawings are not provided in proportions.

Reference numbers: 1000-vehicle; 100-power supply device; 10-battery cell; 11-housing; 111-temperature measuring surface; 20-busbar component; 22-second surface; 30-temperature acquisition module; 31-support frame; 311-main body part; 3111-third surface; 312-first end part; 3121-first positioning surface; 313-second end part; 3131-second positioning surface; 3132-fourth surface; 3133-limiting surface; 314-guiding part; 315-avoidance groove; 316-limiting step; 317-first elastic part; 318-second elastic part; 319-positioning hole; 32-protective part; 321-heat-conducting opening; 322-insertion and connection part; 323-opening part; 324-placing cavity; 33-temperature sensing part; 331-thermosensitive part; 332-electrical connection terminal; 34-reinforcement part; 35-insulator; 36-temperature acquisition unit; 40-signal processing part; 50-signal acquisition part; 51-connection part; 52-insertion part; 60-insulating plate; 61-protrusion; 70-box body; 71-first box body; 72-second box body; 200-controller; 300-motor; Z-first direction; X-second direction; Y-third direction.

### Detailed Description of Embodiments

In order to make the purpose, technical solutions and advantages of the embodiments of the present disclosure clearer, the technical solutions in the embodiments of the present disclosure will be clearly described below in conjunction with drawings in the embodiments of the present disclosure. It is clear that the described embodiments are a part of the embodiments of the present disclosure, and not all of the embodiments. Based on the embodiments of the present disclosure, all the other embodiments obtained by those ordinarily skilled in the art without inventive efforts, shall fall within the scope of protection of the present disclosure.

Unless otherwise defined, all technical and scientific terms used in the present disclosure have the same meaning as commonly understood by those skilled in the art belonging to the present disclosure. The terms used in the specification of the present disclosure are used only for the purpose of describing specific embodiments, and are not intended to limit the present disclosure. The terms "include" and "comprise," and any variations thereof in the specification of the present disclosure and claims and the foregoing description of drawings, are intended to cover a non-exclusive inclusion. The terms, such as "first", "second", etc. in the specification and claims or the drawings described above of the present disclosure are used to differentiate different objects, and are not used to describe a particular order or a relationship of priority.

Reference to "embodiment" in the present disclosure means that particular features, structures, or characteristics described in conjunction with the embodiments can be included in the at least one embodiment of the present disclosure. The occurrence of the phrase at various points in the specification does not necessarily refer to the same embodiment, nor is it a separate or alternative embodiment that is mutually exclusive with other embodiments. It is explicitly and implicitly understood by those skilled in the art that the embodiments described in the present disclosure can be combined with other embodiments.

It should be noted that, in the description of the present disclosure, unless otherwise expressly regulations and definitions, the terms "mount", "link", "connect", "attach" are to be understood in a broad sense. For example, it can be a fixed connection, a detachable connection, or an integral connection; and it can be a direct connection, an indirect connection through an intermediate medium, or a communication inside the two elements. For those ordinarily skilled in the art, specific meanings of the above terms in the present disclosure can be understood in specific situations.

As used in the present disclosure, the "plurality" means more than two (including two).

In the present disclosure, the battery cell can include a lithium-ion secondary battery, a lithium-ion primary battery, a lithium-sulfur battery, a sodium-lithium-ion battery, a sodium-ion battery, or a magnesium-ion battery, etc., which is not limited by the embodiments of the present disclosure. The battery cell can be in cylindrical, flat, rectangular, or other shapes, etc., which is not limited thereto by the embodiments of the present disclosure. The battery cells are generally classified into three types according to the packaging method: cylindrical battery cell, square battery cell, and soft pack battery cell.

The power supply device referred to in embodiments of the present disclosure, also called as a battery, refers to a single physical module including at least one power supply part to provide a higher voltage and capacity, wherein each of the power supply parts is provided with one or more battery cells. For example, the battery referred to in the present disclosure can include a battery module or battery pack, etc. The battery generally includes a box body for packaging one or more battery cells, wherein the box body can prevent liquid or other foreign objects from affecting the charging or discharging of the battery cell.

The battery cell includes electrode assembly and electrolyte, wherein the electrode assembly is consisted of a positive electrode plate, negative electrode plate, and isolation diaphragm. The battery cell works mainly relying on metal ions moving between the positive electrode plate and the negative electrode plate. The positive electrode plate includes a positive electrode collector and a positive electrode active substance layer, wherein the positive electrode active substance layer is coated on a surface of the positive electrode collector. The positive electrode collector not coated with the positive electrode active substance layer protrudes out of the positive electrode collector coated with the positive electrode active substance layer, and the positive electrode collector not coated with the positive electrode active substance layer is configured as a positive electrode lug. Taking the lithium-ion battery as an example, materials of the positive electrode collector can be aluminum, and the positive electrode active substance can be lithium cobaltate, lithium iron phosphate, ternary lithium, or lithium manganate, etc. The negative electrode plate includes a negative electrode collector and a negative electrode active substance layer, wherein the negative electrode active substance layer is coated on a surface of the negative electrode collector. The negative electrode collector not coated with the negative electrode active substance layer protrudes out of the negative electrode collector coated with the negative electrode active substance layer, and the negative electrode collector not coated with the negative electrode active substance layer is configured as a negative electrode lug. The material of the negative electrode collector can be copper, and the negative electrode active substance can be carbon or silicon, etc. In order to ensure that a heavy current is passed without fusing, a plurality of positive electrode lugs are provided and laminated together, and a plurality of negative electrode lugs are provided and laminated together. The material of the isolation diaphragm can be PP (polypropylene) or PE (polyethylene), etc. Additionally, the electrode assembly can be a coiled structure or a laminated structure, which is not limited thereto by the embodiments of the present disclosure.

The battery cell further includes electrode terminals to output electrical energy outwardly. A plurality of power supply parts/battery cells are electrically connected to each other by a busbar component, so that a series connection or parallel connection or hybrid connection of the plurality of battery cells can be realized.

The power supply device further includes a temperature acquisition module and a battery management system, wherein the temperature acquisition module is configured to acquire temperature information of the power supply part, which is to be detected by the battery management system. When the battery management system detects that a temperature signal of the power supply part is out of a normal range, the output power of the power supply device will be limited to realize safety protection.

A common way of acquiring the temperature information from the power supply part in the related art is that: the temperature acquisition module abuts against the busbar component from one side of the busbar component departing away from the power supply part to acquire the temperature information of the power supply part. However, the temperature acquisition module occupies the space on the one side of the busbar component departing away from the power supply part, which leads to a loose internal structure of the power supply device, and reduces the energy density of the power supply device.

The inventors have found that if the space between the power supply part and the busbar component is configured to mount the temperature acquisition module, it can avoid occupying the space of one side of the busbar component departing away from the power supply part, so as to improve the structure compactness of the power supply device and to provide it with better energy density. Furthermore, considering that the space between the power supply part and the busbar component is limited and the assembly difficulty is higher, the temperature acquisition module is designed as a non-detachable structure, which can also avoid a disassembly of the temperature acquisition module during the process of assembling the temperature acquisition module, thereby simplifying the assembly process of the power supply device.

Based on the above ideas, the inventors of the present disclosure provide a technical solution that the temperature acquisition module is the non-detachable structure, which is not only simple to be assembled, but also is of compact structure and has higher energy density.

It can be understood that the power supply device described in embodiments of the present disclosure can directly supply power to the power consumption device, or the power supply device can be formed in parallel, in series, or in hybrid connection to supply power for various power consumption devices in the form of the power supply device.

It can be understood that the use of the battery cell or the power consumption device applied to the power supply device described in the embodiments of the present disclosure can be provided as multiple forms, e.g., a cell phone, portable device, laptop computer, battery vehicle, electric vehicle, boat, spacecraft, electric toy, and power tool, etc. For example, the spacecraft includes an airplane, rocket, space shuttle and spaceship, etc. The electric toy includes a stationary or movable electric toy, e.g., a game console, electric car toy, electric boat toy, and electric airplane toys, etc. The electric tool includes a metal cutting electric tool, grinding electric tool, assembling electric tool, and electric tool for the railroad, e.g., an electric drill, electric sander, electric wrench, electric screwdriver, electric hammer, electric drill, concrete vibrator, and electric planer.

The battery cell, the power supply part, and the power supply device described in the embodiments of the present disclosure are not only limitedly applied to the foregoing power consumption devices, but also can be applied to all power consumption devices using the battery cell, the power supply part, and the power supply device. For brevity, the following embodiments are illustrated by taking the electric vehicle as an example.

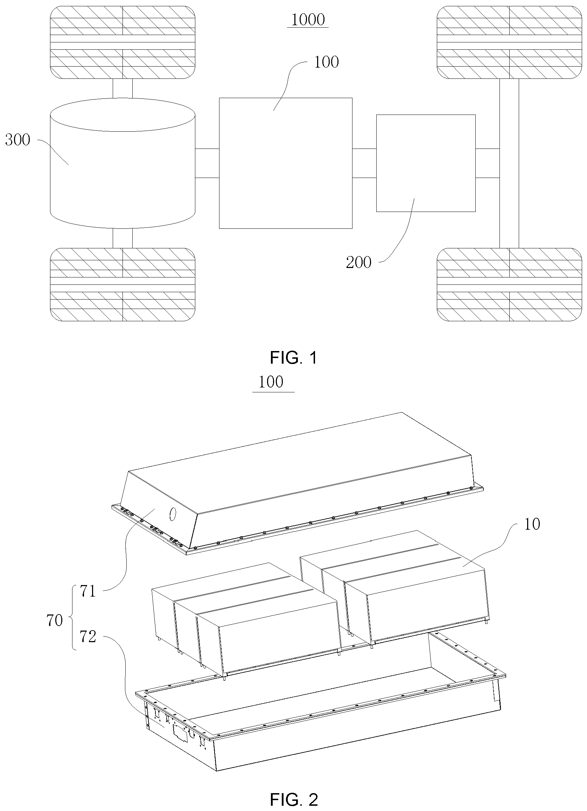

FIG. 1 shows a simple schematic diagram of a vehicle in the embodiment of the present disclosure.

As shown in FIG. 1, a power supply device 100, a controller 200, and a motor 300 are arranged inside a vehicle 1000. For example, the power supply device 100 can be arranged at the bottom or at the front or at the rear of the vehicle 1000. The vehicle 1000 can be a fuel vehicle, gas vehicle or new energy vehicle, wherein the new energy vehicle can be a pure electric vehicle, hybrid electric vehicle or range extended vehicle, etc.

In some embodiments of the present disclosure, the power supply device 100 can be configured to supply power to the vehicle 1000, For example, the power supply device 100 can serve as an operating power supply for the vehicle 1000, and the controller 200 is configured to control the power supply device 100 to supply power for the motor 300. For example, the power supply device 100 is configured to meet electricity demands for work when starting, navigating, and driving the vehicle 1000.

In other embodiments of the present disclosure, the power supply device 100 can not only be configured as the operating power supply of the vehicle 1000, but can also be configured as a driving power supply of the vehicle 1000, which replaces or partially replaces fuel oil or natural gas to provide a driving force for the vehicle 1000.

The power supply device 100 referred to in embodiments of the present disclosure refers to a single physical module including one or more power supply parts to provide a higher voltage and capacity, wherein the power supply parts are connected in series or in parallel by a plurality of battery cells 10.

FIG. 2 shows an overall structure schematic diagram of the power supply device of the vehicle in FIG. 1.

As shown in FIG. 2, the power supply device 100 includes at least one power supply part and a box body 70, wherein each of the power supply parts is provided with at least one battery cell 10. The plurality of battery cells 10 are placed in the box body 70. The box body 70 includes a first box body 71 and a second box body 72. The first box body 71 covers the second box body 72 and forms a battery chamber, wherein the plurality of power supply parts are placed in the battery chamber. The shapes of the first box body 71 and the second box body 72 can be configured according to the shape of a combination of the plurality of power supply parts, and the first box body 71 and the second box body 72 can both be provided with an opening. For example, the first box body 71 and the second box body 72 can both be hollow rectangular, and each of them has only a surface as the opening surface. The opening of the first box body 71 is arranged opposite to the opening of the second box body 72, and the first box body 71 covers the second box body 72 to form the box body 70 with a closed chamber. After combined with each other in parallel or series or hybrid connection, the plurality of power supply parts are placed in the box body 70 formed after the first box body 71 covers the second box body 72.

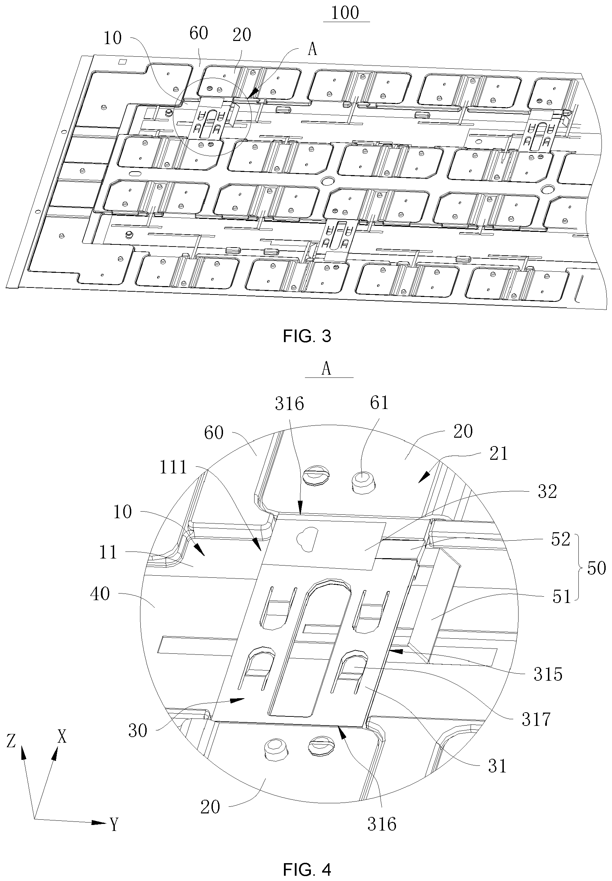

FIG. 3 shows a partial structure schematic diagram of the power supply device of the vehicle in FIG. 1 (the box body is not shown); and FIG. 4 shows a partially enlarged diagram at A in FIG. 3.

As shown in FIG. 2, FIG. 3, and FIG. 4, the power supply device 100 includes a busbar component 20, a temperature acquisition module 30, a signal processing part 40, a signal acquisition part 50, and a box body 70. The plurality of power supply parts are connected with each other in parallel or in series or in mixed to realize a high-voltage output. The plurality of battery cells 10, the busbar component 20, the temperature acquisition module 30, the signal acquisition part 50, and the signal processing part 40 are assembled and placed inside the box body 70. The hybrid connection refers to a connection form with both the series connection and the parallel connection between the plurality of power supply parts/battery cells 10.

Each of the battery cells 10 includes a housing 11, two electrode terminals, and an electrode assembly (not shown). The housing 11 can be of a hexahedron or other shapes, and an accommodating chamber is arranged in the housing 11 to accommodate the electrode assembly and the electrolyte. The housing 11 includes a housing body and an end cover, wherein one end of the housing body is provided with an opening, so that the electrode assembly can be placed inside the housing body through the opening. The housing body can be made of metallic materials, such as aluminum, aluminum alloy, or nickel-plated steel. The electrode assembly is arranged inside the housing body. Two electrode lead-out holes are arranged in the end cover, and the two electrode terminals are provided in the two electrode lead-out holes of the end cover. Among the two electrode terminals, one is the positive electrode terminal and the other is the negative electrode terminal. The electrode assembly includes two lugs, one of which is the positive electrode lug and the other is the negative electrode lug. The positive electrode terminal is connected to the positive electrode lug of the electrode assembly, and the negative electrode terminal is connected to the negative electrode lug of the electrode assembly.

In some embodiments of the present disclosure, the housing 11 is of rectangular; two electrode terminals both are arranged in the end cover; and the end cover of the plurality of battery cells 10 are arranged on the same side. In other embodiments, the housing 11 can also be a cylinder or other shapes.

The busbar component 20 is configured to electrically connect to the battery cell 10 to assemble the current between the power supply parts and/or the battery cells. Specifically, the busbar component 20 is connected to two opposite polarity electrode terminals of two battery cells 10 arranged adjacent to each other to realize the series connection of the two battery cells 10; or the busbar component 20 is connected to same polarity electrode terminals of two battery cells 10 arranged adjacent to each other to realize the parallel connection of the two battery cells 10; or the busbar component 20 is connected to electrode terminals at an output end to realize a connection of the power supply device 100 and an external output interface. The material of the busbar component 20 can be copper or aluminum. The busbar component 20 can be molded by a stamping process or can be molded by a casting process.

The temperature acquisition module 30 abuts against the surface of the power supply part/battery cell 10 to acquire the temperature of the power supply part. The signal processing part 40 is connected to the temperature acquisition module 30 by the signal acquisition part 50, wherein the signal processing part 40 is configured to receive electrical signals representing the temperature acquired by the temperature acquisition module 30 and transmit them to a battery management system (not shown), so that the battery management system analyzes and determines whether the battery cell 10 is in a normal operating state.

The signal processing part 40 can be directly arranged on the surface of the power supply part and arranged on the same side with the busbar component 20. The signal processing part 40 can also be fixed inside the box body by other connection members.

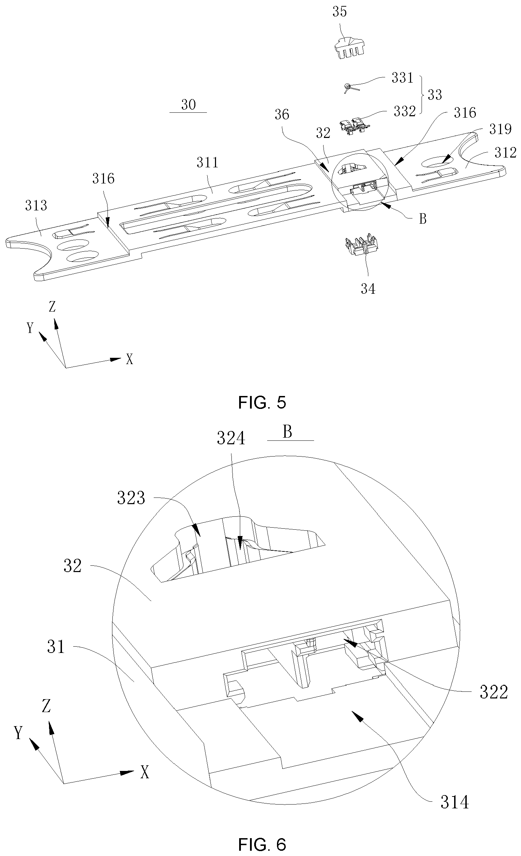

FIG. 5 shows an explosion diagram of the temperature acquisition module of the power supply device in some embodiments of the present disclosure; and FIG. 6 shows a partially enlarged diagram at B in FIG. 5.

As shown in FIG. 3, FIG. 4, FIG. 5, and FIG. 6, some embodiments of the present disclosure provide a power supply device 100 including at least one power supply part and the temperature acquisition module 30. Each of the power supply parts is provided with at least one battery cell 10, and the temperature acquisition module 30 includes a support frame 31 and a temperature acquisition unit 36. The support frame 31 is configured to fix the temperature acquisition module relative to the power supply part. The temperature acquisition unit 36 is arranged on the support frame 31, wherein the temperature acquisition unit 36 is configured to be thermally connected to the power supply part to acquire the information relative to temperature of the power supply part, wherein the support frame 31 is integrally molded with the temperature acquisition unit 36.

When a power supply part includes a plurality of battery cells 10, the temperature of one of the battery cells 10 represents the temperature of the power supply part. When a power supply part includes one battery cell 10, the temperature of one battery cell 10 represents the temperature of the power supply part.

As shown in FIG. 4, specifically, along the first direction Z, a surface of the end cover departing away from the interior of the battery cell 10 is a temperature measuring surface 111. The temperature acquisition module 30 is configured to abut against the temperature measuring surface 111 to acquire the temperature of the power supply part. The thickness of the busbar component 20 extends along the first direction Z. Along the first direction Z, one side of the busbar component 20 facing the temperature measuring surface 111 is provided with a first surface (not shown in the drawings), and one side departing away from the temperature measuring surface 111 is provided with a second surface 22, wherein a space is arranged between the first surface and the second surface 22. The end part of the support frame 31 is inserted between the first surface and the second surface 22 to assemble with the battery cell 10 and the busbar component 20. The end part of the support frame 31 separately abuts against the first surface and the second surface 22 along two sides of the first direction Z, so as to fix a position of the temperature acquisition module 30 in the first direction Z.

The end part of the support frame 31 is inserted into the space between the busbar component 20 and the battery cell 10. The protective part 32 is integrally molded on the remaining part of the support frame 31 (e.g., the main body part 311 as follows). The partial structure of the temperature acquisition unit 36 is arranged in the protective part 32. The space between the busbar component 20 and the battery cell 10 can be exposed by the temperature acquisition module 30, so as to facilitate the assembly with the signal acquisition part 50. The temperature acquisition module 30 can also be arranged in the space between the busbar component 20 and the battery cell 10 and only expose an opening (i.e., the insertion and connection part 322 as follows) connecting to the signal acquisition part 50, which fully utilizes the space between the busbar component 20 and the battery cell 10, so that the power supply device 100 has a compact structure.

The support frame 31 of the temperature acquisition module 30 and the temperature acquisition unit 36 are integrally molded means that the temperature acquisition unit 36 is provided with a corresponding connection member (i.e., the protective part 32 as follows), so that the support frame 31 and the protective part 32 are not detachable with each other. The support frame 31 and the protective part 32 can be molded by adopting an injection molding process, or can be formed into an integral structure by adopting a process of hot-melt recombination.

As shown in FIG. 5 and FIG. 6, a placing cavity 324 is arranged inside the protective part 32; the temperature acquisition unit 36 includes a temperature sensing part 33; the temperature sensing part 33 is arranged in the placing cavity 324 of the protective part 32; and an acquisition end of the temperature sensing part 33 is directly or indirectly thermally connected to the temperature measuring surface 111 of the battery cell 10 (referring to FIG. 4). When fixing the temperature sensing part 33 on the protective part 32, it can naturally place the temperature sensing part 33 in the placing cavity 324, and inject a filler into the placing cavity 324 to fix the temperature sensing part 33 in the placing cavity 324; it can also be first fixedly connected to the protective part 32 by a snapping connection structure, and then inject the filler into the placing cavity 324 to fix the position of the temperature sensing part 33; or the temperature sensing part 33 can be fixed on the inner wall of the placing cavity 324 in a pasting method.

In the power supply device 100 of the embodiments of the present disclosure, the support frame 31 of the temperature acquisition module 30 is integrally molded with the temperature acquisition unit 36. The temperature acquisition module 30 is not easily disassembled during the process of assembling and molding the power supply device 100, so as to reduce the difficulty of assembling the power supply device 100, thereby shortening the assembly duration of the power supply device 100, and improving the assembly efficiency of the power supply device 100.

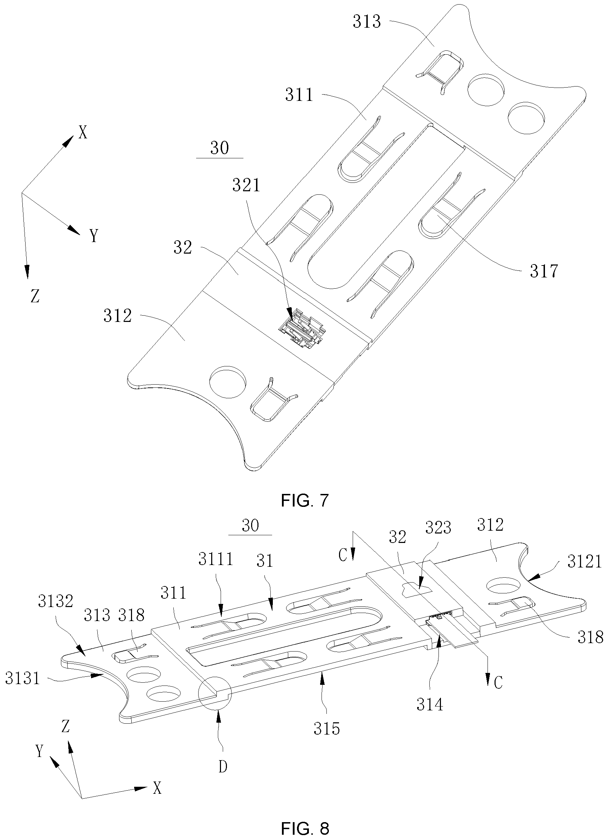

FIG. 7 shows a structure schematic diagram of the support frame and a protective connection member of the integral structure in the temperature acquisition module of the power supply device in some embodiments of the present disclosure.

As shown in FIG. 5, FIG. 6, and FIG. 7, in some embodiments of the present disclosure, the temperature acquisition unit 36 includes the temperature sensing part 33, which is configured to acquire the information relative to temperature of the power supply part, and convert the information relative to temperature into the electrical signal and transmit the electrical signal, wherein the temperature sensing part 33 is configured to be thermally connected to the power supply part.

A heat-conducting opening 321 is arranged on one side of the protective part 32 facing the battery cell 10. The temperature sensing part 33 is configured to thermally connect to the surface of the battery cell 10 by passing through the heat-conducting opening 321. The temperature sensing part 33 can be thermally connected to the surface of the battery cell 10 by an intermediate heat conductor, or can directly abut against the surface of the battery cell 10.

In the above solution, the temperature sensing part 33 is thermally connected to the power supply part to acquire the information relative to temperature of the power supply part.

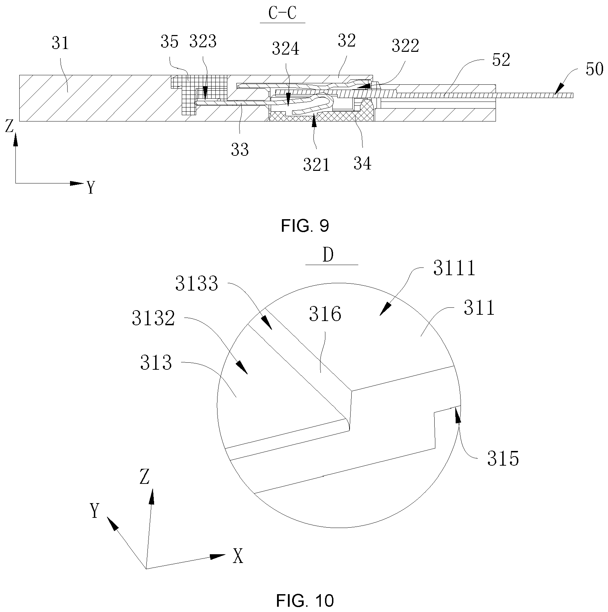

FIG. 8 shows a structure schematic diagram that the temperature acquisition module is assembled with the signal acquisition part of a power supply device in some embodiments of the present disclosure; and FIG. 9 shows a sectional diagram in a C-C direction of FIG. 8.

As shown in FIG. 5, FIG. 8, and FIG. 9, the insertion and connection part 322 is arranged in the support frame 31; the insertion and connection part 322 is electrically connected to the temperature sensing part 33; and the insertion and connection part 322 is configured to detachably connect to an acquisition component for acquiring information relative to temperature.

In the above solution, the acquisition component is inserted into the insertion and connection part 322 by way of inserting and pulling out, and is electrically connected to the temperature sensing part 33, which is not only easy to be assembled, but also the acquisition component can acquire the electrical signal converted by the temperature sensing part 33 according to the information relative to temperature.

As shown in FIG. 5, FIG. 8, and FIG. 9, in some embodiments of the present disclosure, the temperature sensing part 33 includes a thermosensitive part 331 and an electrical connection terminal 332, wherein the thermosensitive part 331 is configured to convert the information relative to temperature into the electrical signal, and the electrical connection terminal 332 is connected to the thermosensitive part 331 and configured to be able to transmit the electrical signal.

The thermosensitive part 331 includes a thermistor and two harnesses, both of the two harnesses are connected to the thermistor. Two electrical connection terminals 332 are provided. The electrical connection terminals 332 are in one-to-one correspondence with the harnesses, wherein one end of each of the electrical connection terminals 332 is connected to the corresponding harness, and the other end is configured to connect to the acquisition component (i.e., the signal acquisition part 50). The electrical connection terminals 332 further cooperates with the protective part 32 by the snapping connection structure to prefix the relative position between the electrical connection terminals 332 and the protective part 32. Specifically, the electrical connection terminals 332 can be connected to the corresponding harnesses by welding or by winding.

The electrical connection terminal 332 can form a clasp structure of U-shaped for the insertion of the signal acquisition part 50, which helps the temperature sensing part 33 to be reliably connected to the signal processing part 40.

In the above solution, the electrical connection terminals 332 are connected to the thermosensitive part 331. The acquisition component is inserted into the insertion and connection part 322 and then electrically connected to the thermosensitive part 331 by the electrical connection terminal 332 to acquire the electrical signal converted according to information relative to temperature.

In some embodiments of the present disclosure, the temperature sensing part 33 includes a protective connection member, wherein the protective connection member is configured to limitedly fix the thermosensitive part 331 on the support frame 31.

The heat-conducting opening 321 is arranged on one side of the protective part 32 facing the first surface, and the temperature sensing part 33 is arranged in the placing cavity 324. The partial structure of the protective connection member is a cured thermal adhesive. The thermal adhesive wraps around the temperature sensing part 33 to connect the acquiring end of the temperature sensing part 33 to the exterior of the protective part 32.

The shape of the heat-conducting opening 321 can be square, circle, ellipse, or other shapes. The heat-conducting opening 321 is configured to expose the partial surface of the thermal adhesive to facilitate the contact of the thermal adhesive with the temperature measuring surface 111 of the battery cell 10.

The surface of the thermal adhesive can be flush to the heat-conducting opening 321 to smooth the surface of the temperature acquisition module 30. The surface of the thermal adhesive can also protrude out of the heat-conducting opening 321 to facilitate that the thermal adhesive conveniently abuts against the temperature measuring surface 111 of the battery cell 10.

In the above solution, the protective connection member limitedly fixes the thermosensitive part 331 on the support frame 31, which not only fixes the relative position of the thermosensitive part 331 and the support frame 31, but also provides the protective effect for the thermosensitive part 331, thereby reducing the possibility that the thermosensitive part 331 is damaged by the external forces, and improving the reliability of the temperature acquisition module 30.

In some embodiments of the present disclosure, the protective connection member includes a protective part 32 and a reinforcement part 34. The protective part 32 is integrally molded with the support frame 31 and accommodates the thermosensitive part 331. The reinforcement part 34 cooperates with and is detachably connected to the protective part 32, and the reinforcement part 34 is configured to be able to reinforce the connection strength of the acquisition component which is detachably connected to the insertion and connection part 322.

The placing cavity 324 is arranged inside the protective part 32, and the thermosensitive part 331 and the electrical connection terminals 332 are placed in the placing cavity 324. The protective part 32 is provided with heat-conducting opening 321 and the reinforcement part 34 is configured to fill the placing cavity 324 from the heat-conducting opening 321, which not only improves the strength of the protective part 32, but also improves the connection strength of the acquisition component and the temperature acquisition module 30 after the acquisition component is inserted into the insertion and connection part 322. The reinforcement part 34 can be the thermal adhesive foregoing, or can be a component made of the insulating material.

In the above solution, the protective part 32 is integrally molded with the support frame 31. The temperature acquisition module 30 is not easily disassembled during the process of assembling and molding the power supply device 100, so as to reduce the difficulty of assembling the power supply device 100. The reinforcement part 34 is configured to reinforce the connection strength of the acquisition component and the support frame 31, so that the acquisition component can robustly acquire the electrical signal converted based on the information relative to temperature.

In some embodiments of the present disclosure, the power supply device 100 includes a signal processing part 40 and a signal acquisition part 50. The signal processing part 40 is configured to be able to receive the electrical signal and analyze the temperature condition of the power supply part according to the electrical signal. The signal acquisition part 50 is electrically connected to the signal processing part, wherein the signal acquisition part 50 is the acquisition component, and the signal acquisition part 50 is configured to acquire the electrical signal and transmit it to the signal processing part.

The signal acquisition part 50 includes a connection part 51 and an insertion part 52, wherein the connection part 51 is electrically connected to the signal processing part 40, and the insertion part 52 is configured to insert into the interior of the protective part 32 from the insertion and connection part 322. The signal acquisition part 50 further includes a limiting structure corresponding to the protective part 32 to limit a limiting insertion position of the signal acquisition part 50.

The insertion and connection part 322 of the protective part 32 can be located at other parts of the protective part 32 other than the one side facing the temperature measuring surface 111 of the battery cell 10. Specifically, the support frame 31 is in a platy structure. The thickness direction of the support frame 31 extends along the first direction Z; the length direction extends along the second direction X; and the width direction extends along the third direction Y. The insertion and connection part 322 of the protective part 32 can be located at one side of the protective part 32 departing away from the temperature measuring surface 111 along the first direction Z, or at one side of the protective part 32 along the third direction Y.

In the above solution, the signal acquisition part 50 is connected to the signal processing part 40. The signal acquisition part 50 can transmit the acquired electrical signal converted according to the information relative to temperature to the signal processing part 40, and the signal processing part 40 analyses the temperature condition of the power supply part to ensure the safe operation of the power supply device 100.

As shown in FIG. 8 and FIG. 9, in some embodiments of the present disclosure, the power supply device 100 is provided with busbar component 20. The busbar component 20 is configured to assemble the current between the power supply parts and/or the battery cells 10, and the signal acquisition part 50 is inserted into the insertion and connection part 322 along the direction parallel to the surface of the busbar component 20.

The busbar component 20 is a sheet-like structure. The thickness direction of the busbar component 20 extends along the first direction Z, and the direction parallel to the surface of the busbar component 20 is the other direction perpendicular to the first direction Z. The signal acquisition part 50 can be inserted directly into the insertion and connection part 322, or can be guided by a guiding structure on the support frame 31 or on the protective part 32 to insert into the insertion and connection part 322.

In the above solution, the direction that the signal acquisition part 50 is inserted into the insertion and connection part 322 is parallel to the surface of the busbar component 20, which can reduce one side of the space that the busbar component 20 departs away from the battery cell 10 occupied by the signal acquisition part 50, so that the power supply device 100 has the compact structure and higher energy density.

As shown in FIG. 8, in some embodiments of the present disclosure, the support frame 31 further includes a guiding part 314. One end of the guiding part 314 extends to the insertion and connection part 322 and the other end extends to the edge of the support frame 31. The guiding part 314 is configured to guide the signal acquisition part 50 to insert into the insertion and connection part 322 along the direction parallel to the surface of the busbar component 20.

The guiding part 314 is formed by recessing a surface of the support frame 31 departing away from the temperature measuring surface 111 of the battery cell 10 along the first direction Z, and the guiding part 314 extends along the third direction Y. One end of the guiding part 314 extends to the insertion and connection part 322, and the other end extends to the edge of the support frame 31. Along the second direction X, the width of the guiding part 314 is arranged correspondingly to the width of the signal acquisition part 50.

In the above solution, the guiding part 314 can guide the signal acquisition part 50 to insert into the insertion and connection part 322, so that the signal acquisition part 50 is easily inserted into the insertion and connection part 322, so as to simplify the assembly process of the power supply device 100.

As shown in FIG. 8 and FIG. 9, in some embodiments of the present disclosure, one side of the protective part 32 departing away from the battery cell 10 is provided with the opening part 323, wherein the opening part 323 is configured to expose the connection position of the thermosensitive part 331 and the electrical connection terminal 332.

Along the first direction Z, an opening part 323 is arranged at one side of the protective part 32 departing away from the temperature measuring surface 111, wherein the position of the opening part 323 is corresponding to the connection position of the harness of the thermosensitive part 331 and the electrical connection terminal 332. The shape of the opening part 323 can be circle, square, ellipse, or in other shapes.

In the above solution, the opening part 323 exposes the connection position of the thermosensitive part 331 and the electrical connection terminal 332. During the process of assembling and molding the temperature acquisition module 30, it can realize that the thermosensitive part 331 and the electrical connection terminal 332 are first placed into the interior of the protective part 32, and then the thermosensitive part 331 and the electrical connection terminal 332 are connected as a whole, which simplifies the assembly process of the temperature acquisition module 30.

In some embodiments of the present disclosure, the power supply device 100 further includes an insulator 35, wherein the insulator 35 is configured to close the opening part 323.

After the thermosensitive part 331 is connected to the electrical connection terminal 332, the insulating adhesive can be injected into the opening part 323 to fill the placing cavity 324 of the protective part 32 from one side of the opening part 323, so that the insulating adhesive solidifies to form the insulator 35.

In the above solution, the opening part 323 is closed by the insulator 35 to package the temperature acquisition unit 36 inside the protective part 32, which not only protects the temperature acquisition unit 36 and improves the service life of the temperature acquisition unit 36, but also insulates the temperature acquisition unit 36 from the other components inside the power supply device 100, so that the temperature acquisition unit 36 has a higher temperature acquisition accuracy.

As shown in FIG. 8 and FIG. 9, in some embodiments of the present disclosure, the support frame 31 includes a main body part 311 and two end parts. The main body part 311 is connected to the two end parts, and the temperature acquisition unit 36 is arranged on the main body part 311.

The main body part 311 is integrally molded with the protective part 32, wherein the temperature sensing part 33 is arranged on the protective part 32 and exposes the space between the busbar component 20 and the battery cell 10.

The two end parts separately are the first end part 312 and the second end part 313, wherein the first end part 312 and the second end part 313 are arranged on both sides of the main body part 311 along the second direction X. In other embodiments, the first end part 312 and the second end part 313 can also be arranged on other parts of the main body part 311.

In the above solution, the two end parts are separately inserted between the busbar component 20 and the battery cell 10, and the temperature acquisition unit 36 is arranged on the main body part 311. The temperature acquisition unit 36 can be approximately located at the middle of the support frame 31 in this way, so that the support frame 31 is forced uniformly when the temperature acquisition unit 36 abuts against the surface of the battery cell 10 by the thermal adhesive and is not to be easily warped. The temperature acquisition unit 36 uniformly abuts against the surface of the battery cell 10, so as to provide a better temperature acquisition accuracy. The space between the busbar component 20 and the battery cell 10 of the main body part 311 can also be exposed in this way, so as to facilitate the assembly of the temperature acquisition module 30 and the other components.

As shown in FIG. 8, in some embodiments of the present disclosure, the edge of the end part departing away from the main body part 311 is provided with the positioning surface; the battery cell 10 is provided with electrode terminals; and the positioning surface and the external peripheral surface of the electrode terminals are matched in shape and abut against each other.

Along the second direction X, the edge of the first end part 312 departing away from the main body part 311 is provided with a first positioning surface 3121; the edge of the second end part 313 departing away from the main body part 311 is provided with a second positioning surface 3131; and the first positioning surface 3121 and the second positioning surface 3131 are separately corresponding to one electrode terminal. Specifically, a part of the electrode terminal exposed from exterior of the battery cell 10 includes an end surface and an external peripheral surface. The end surface refers to the surface of the electrode terminal departing away from the temperature measuring surface 111, and the external peripheral surface is connected to the end surface and the temperature measuring surface 111. The shapes of the first positioning surface 3121 and the second positioning surface 3131 are separately corresponding to the external peripheral surfaces of the corresponding electrode terminals. For example, when the electrode terminals are in cylinder, the first positioning surface 3121 and the second positioning surface 3131 are both arc surfaces.

In the above solution, the end parts abut against the external peripheral surface of the electrode terminals by the positioning surface, and the support frame 31 abuts between the two electrode terminals by the two end parts, so that the position of the temperature acquisition module 30 is easy to be fixed, which simplifies the assembly process of the power supply device 100, and also reduces the swaying of the temperature acquisition module 30 relative to the battery cell 10.

As shown in FIG. 4 and FIG. 7, in some embodiments of the present disclosure, the signal processing part 40 is arranged on the surface of the power supply part. The support frame 31 further includes a first elastic part 317, wherein the first elastic part 317 is arranged on the main body part 311 to elastically abut against one side of the signal processing part 40 departing away from the battery cell 10.

The first elastic part 317 protrudes out of one side of the main body part 311 facing the battery cell 10 to elastically press the signal processing part 40.

A plurality of busbar components 20 are provided. The first end part 312 and the second end part 313 of the support frame 31 are separately inserted into the space between the two adjacent busbar components 20 and the corresponding battery cell 10. The two adjacent busbar components 20 are exposed from the main body part 311. The signal processing part 40 is placed on the surface of the battery cell 10, and located between the main body part 311 and the battery cell 10. The temperature acquisition unit 36 abuts against the surface of the battery cell 10 which is not covered by the signal processing part 40 and the busbar components 20. The main body part 311 is provided with the first elastic part 317, which can elastically press the signal processing part 40 against the surface of the battery cell 10 to accomplish the fixation of the signal processing part 40.

One or more first elastic parts 317 can be provided. The first elastic part 317 can be formed by winding partial structure of the body of the support frame 31, or can be formed by further assembling elastic members on the surface of the support frame 31.

In the above embodiment, the main body part 311 abuts the signal processing part 40 against the surface of the battery cell 10 by the first elastic part 317, which can help to fix the signal processing part 40 and the power supply part, thereby simplifying the construction of the power supply device 100.

As shown in FIG. 4 and FIG.8, in some embodiments of the present disclosure, one side of the main body part 311 facing the power supply part is provided with an avoidance groove 315, wherein the avoidance groove 315 is configured to avoid the signal processing part 40.

The surface of the signal processing part 40 departing away from the battery cell 10 is provided with electrical components, which needs to occupy a certain height space. One side of the main body part 311 facing the battery cell 10 is recessed to form the avoidance groove 315 along the first direction Z. The avoidance groove 315 extends to the edge of the support frame 31 along the third direction Y. The gap between the bottom wall of the avoidance groove 315 and the surface of the battery cell 10 is the height space of the avoidance signal processing part 40.

In the above embodiment, the one side of the main body part 311 facing the battery cell 10 is provided with the avoidance groove 315, which can increase the space between the surface of the main body part 311 and the battery cell 10, so as to avoid the electrical components arranged on the signal processing part 40.

As shown in FIG. 4 and FIG. 5, in some embodiments of the present disclosure, a limiting step 316 is formed at the connection position of the main body part 311 and the end part, and the limiting step 316 is configured to abut against the edge of the busbar component 20.

The connection positions of each of the end parts and the main body part 311 are provided with one limiting step 316 to abut against edges of the corresponding busbar component 20.

FIG. 10 shows a partially enlarged diagram at D in FIG. 8.

As shown in FIG. 8 and FIG. 10, taking the connection position of the second end part 313 and the main body part 311 as an example, one side of the main body part 311 departing away from the battery cell 10 is provided with a third surface 3111, and one side of the second end part 313 departing away from the battery cell 10 is provided with a fourth surface 3132. The limiting surface 3133 is arranged at one side of the main body part 311 close to the second end part 313 along the second direction X. The fourth surface 3132 is connected to the third surface 3111 by the limiting surface 3133, and the fourth surface 3132 is closer to the battery cell 10 relative to the third surface 3111. The second end part 313 and the main body part 311 form the limiting step 316 at the limiting surface 3133. The limiting surface 3133 is configured to abut against the edge of the busbar component 20 to limit the position of the busbar component 20.

In the above solution, when the end part of the support frame 31 extends between the busbar component 20 and the battery cell 10, the busbar component 20 abuts against the limiting step 316. This solution is easy to locate the position of the temperature acquisition module 30 and simplifies the assembling process of the power supply device 100. The surface departing away from the battery cell 10 of the main body part 311 is higher than or flush to the surface departing away from the battery cell 10 of the busbar component 20 by this solution, so as to arrange the main body part 311 by utilizing the space occupied in the thickness direction of the busbar component 20, so that the power supply device 100 has the compact structure and higher energy density.

As shown in FIG. 8, in some embodiments of the present disclosure, the support frame 31 further includes a second elastic part 318, wherein the second elastic part 318 is arranged at the end part to elastically abut against the busbar component 20.

As shown in FIG. 8, the second elastic part 318 is similar to the first elastic part 317. The second elastic part 318 protrudes out of one side of the first end part 312 and the second end part 313 facing the busbar component 20 to elastically abut against the corresponding busbar component 20. One or more second elastic parts 318 can be provided. The second elastic part 318 can be formed by winding the partial structure of the first end part 312 and the second end part 313, or can be formed by further assembling elastic members on the surface of the first end part 312 and the second end part 313.

In the above solution, the end part elastically abuts against the busbar component 20 by the second elastic part 318, which not only leads the end part to be easily inserted between the busbar component 20 and the battery cell 10, but also can cushion the swaying of the temperature acquisition module 30 caused by the power supply device 100 in the condition of turbulence and shock, so that the temperature acquisition unit 36 can abut against the surface of the battery cell 10.

As shown in FIG. 4 and FIG. 5, in some embodiments of the present disclosure, the power supply device 100 further includes an insulating plate 60 arranged on the surface of the power supply part. The end part of the support frame 31 is inserted between the busbar component 20 and the insulating plate 60, and the positioning hole 319 is arranged in the end part. The protrusion 61 is formed on the surface of the insulating plate 60, and the protrusion 61 is inserted into the positioning hole 319 to fix the support frame 31 between the busbar component 20 and the insulating plate 60.

The insulating plate 60 can be a common plastic insulating plate. The insulating plate 60 is configured to insulate and protect the surface of the battery cell 10, and also exposes a partial region of the temperature measuring surface 111 for temperature sampling by the temperature acquisition unit 36. The insulating plate 60 is fixed relative to the battery cell 10 by other positioning structures, which are not described in an expanded manner in the present disclosure embodiment.

The first end part 312 and the second end part 313 are separately fixed with the insulating plate 60 by cooperation of the positioning hole 319 and the protrusion 61.

As shown in FIG. 4 and FIG. 5, taking the first end part 312 as an example, the positioning hole 319 passing through along the first direction Z is arranged in the first end part 312. The protrusion 61 is protrudingly formed on one side of the insulating plate 60 departing away from the surface of the battery cell 10. The shape of the protrusion 61 matches the shape of the positioning hole 319. The protrusion 61 is inserted into the positioning hole 319 to limit the relative position of the insulating plate 60 and the support frame 31 in the XY plane, which further limits the position of the temperature acquisition module 30 in the box body.

In the above solution, the insulating plate 60 is arranged on the surface of the battery cell 10, which can realize that the end part of the support frame 31 insulatively abuts between the surface of the busbar component 20 and the battery cell 10. Additionally, the protrusion 61 cooperates with the positioning hole 319, which can locate the position of the support frame 31 and simplify the assembly process of the power supply device 100.

Some embodiments of the present disclosure provide a power consumption device including a power supply device 100, wherein the power supply device 100 is configured to provide electrical energy.

The temperature acquisition module 30 is non-detachable in the power supply device 100 of some embodiments of the present disclosure, that is, the temperature acquisition module 30 is not easy to be disassembled during the assembly process of the power supply device 100, so as to be easily and simply assembled. Therefore, the power consumption device of some embodiments of the present disclosure also has the advantage of easy and simple assembly of the power supply device 100 thereof.

As shown in FIG. 1 to FIG. 10, some embodiments of the present disclosure provide a power supply device 100 including the box body 70, a plurality of battery cells 10, a plurality of busbar components 20, the temperature acquisition module 30, the signal processing part 40, the signal acquisition part 50, and the insulating plate 60, wherein the battery cells 10, the busbar components 20, the temperature acquisition module 30, the signal processing part 40, the signal acquisition part 50, and the insulating plate 60 are arranged inside the box body 70. The electrode terminals of two adjacent battery cells 10 are connected by a busbar component 20, so as to realize the parallel or series connection of the two battery cells 10. A mounting space is arranged between the battery cell 10 and the busbar component 20. The temperature acquisition module 30 includes the support frame 31, the protective part 32, the temperature acquisition unit 36, the thermal adhesive and the insulator 35. The support frame 31 includes the main body part 311, and the first end part 312 and the second end part 313 arranged on both sides of the main body part 311. The first end part 312 and the second end part 313 are separately inserted into the space between the two adjacent busbar components 20 and the battery cell 10, and the end parts thereof separately abut against the external peripheral surfaces of the corresponding electrode terminals. The support frame 31 is integrally molded with the protective part 32. The placing cavity 324 is arranged in the protective part 32. The temperature sensing part 33 is located inside the placing cavity 324. The heat-conducting opening 321, the insertion and connection part 322, and the opening part 323 are arranged in the protective part 32. The heat-conducting opening 321 is arranged facing the battery cell 10. The heat-conducting opening 321 is closed by the reinforcement part 34, and the temperature sensing part 33 is thermally connected to the surface of the battery cell 10 by the reinforcement part 34. The opening part 323 departs from the battery cell 10 and is closed by the insulator 35. The insertion and connection part 322 is located at the side part, which is configured to be inserted by the signal acquisition part 50. One end of the signal acquisition part 50 is inserted into the insertion and connection part 322 to connect to the temperature sensing part 33. The other end of the signal acquisition part 50 is connected to the signal processing part 40 to output the electrical signal representing the temperature signal which is acquired by the temperature sensing part 33.

After the battery cell 10, the insulating plate 60, the busbar component 20, and the signal processing part 40 are assembled, it is only necessary to separately insert the first end part 312 and the second end part 313 of the support frame 31 into the space between the two adjacent busbar components 20 and the corresponding battery cells 10, so that the first end part 312 and the second end part 313 abut against the corresponding electrode terminals; the main body part 311 of the support frame 31 presses against the signal processing part 40, and the thermal adhesive of the temperature acquisition module 30 abuts against the surface of the battery cell 10; and then the signal acquisition part 50 is inserted into the temperature acquisition module 30 to connect with the temperature acquisition unit 36, so as to complete the assembly of the power supply device 100. The support frame 31 is integrally molded with the protective part 32, and the temperature sensing part 33 is non-detachably arranged inside the protective part 32, so that the whole temperature acquisition module 30 is the integral structure. On the one hand, the temperature acquisition module 30 is not easily disassembled during the process of assembling the power supply device 100, which simplifies the assembly process of the power supply device 100. On the other hand, the space between the busbar component 20 and the battery cell 10 is configured to fix the temperature acquisition module 30, which can avoid occupying too much space at one side of the busbar component 20 departing away from the battery cell 10, so that the power supply device 100 has the compact structure and better energy density.

It is noted that the features of the embodiments in the present disclosure can be combined with each other without conflict.

The above embodiments are only preferred embodiments of the present disclosure, and are not intended to limit the present disclosure. For those skilled in the art, the present disclosure can be made of various changes and variations. Any modifications, equivalent substitutions, improvements, etc. made within the spirits and principles of the present disclosure shall be included in the scope of protection of the present disclosure.

## Claims

1. A power supply device, comprising:
at least one power supply part, wherein each power supply part is provided with at least one battery cell; and
a temperature acquisition module, comprising a support frame and a temperature acquisition unit, wherein the support frame is configured to fix the temperature acquisition module relative to the power supply part,
wherein the temperature acquisition unit is arranged on the support frame and the temperature acquisition unit is configured to be thermally connected to the power supply part to acquire information relative to a temperature of the power supply part, wherein the support frame is integrally molded with the temperature acquisition unit.

2. The power supply device according to claim 1, wherein the temperature acquisition unit comprises:
a temperature sensing part, configured to acquire the information relative to the temperature of the power supply part, and convert the information relative to the temperature into an electrical signal and transmit the electrical signal,
wherein the temperature sensing part is configured to be thermally connected to the power supply part.

3. The power supply device according to claim 2, wherein the support frame is provided with an insertion and connection part; the insertion and connection part is electrically connected to the temperature sensing part; and the insertion and connection part is configured to be able to be detachably connected to an acquisition component for acquiring the information relative to the temperature.

4. The power supply device according to claim 3, wherein the temperature sensing part comprises a thermosensitive part and electrical connection terminals, wherein the thermosensitive part is configured to convert the information relative to the temperature into the electrical signal, and the electrical connection terminals are connected to the thermosensitive part and configured to transmit the electrical signal.

5. The power supply device according to claim 4, wherein the temperature sensing part comprises a protective connection member, wherein the protective connection member is configured to limitedly fix the thermosensitive part on the support frame.

6. The power supply device according to claim 5, wherein the protective connection member comprises a protective part and a reinforcement part, wherein the protective part is integrally molded with the support frame and accommodates the thermosensitive part; the reinforcement part cooperates with and is detachably connected to the protective part; and the reinforcement part is configured to reinforce a connection strength of the acquisition component that is detachably connected to the insertion and connection part.

7. The power supply device according to any one of claims 3-6, comprising:
a signal processing part, configured to be able to receive the electrical signal and analyze a temperature condition of the power supply part according to the electrical signal; and
a signal acquisition part, configured to electrically connect to the signal processing part, wherein the signal acquisition part is the acquisition component, and the signal acquisition part is configured to acquire the electrical signal and transmit the electrical signal to the signal processing part.

8. The power supply device according to claim 7, wherein a busbar component is arranged on the power supply device, wherein the busbar component is configured to converge currents between power supply parts and/or battery cells, and the signal acquisition part is inserted into the insertion and connection part along a direction parallel to a surface of the busbar component.

9. The power supply device according to claim 7 or 8, wherein the support frame comprises a guiding part, wherein one end of the guiding part extends to the insertion and connection part and the other end extends to an edge of the support frame, wherein the guiding part is configured to guide the signal acquisition part to be inserted into the insertion and connection part along a direction parallel to a surface of the support frame.

10. The power supply device according to any one of claims 4-9, wherein one side of the temperature sensing part departing away from the battery cell is provided with an opening part, wherein the opening part is configured to expose a connection position of the thermosensitive part and the electrical connection terminals.

11. The power supply device according to claim 10, wherein the power supply device further comprises an insulator, and the insulator is configured to close the opening part.

12. The power supply device according to any one of claims 1-11, wherein the support frame comprises a main body part and two end parts, wherein the main body part is connected to the two end parts, and the temperature acquisition unit is arranged on the main body part.

13. The power supply device according to claim 12, wherein an edge of the end parts departing away from the main body part is provided with a positioning surface; the battery cell is provided with electrode terminals; and the positioning surface and an external peripheral surface of the electrode terminals are matched in shape and abut against each other.

14. The power supply device according to claim 12 or 13, wherein the power supply device comprises a signal processing part, and the signal processing part is arranged on a surface of the power supply part, wherein the support frame comprises:
a first elastic part, wherein the first elastic part is arranged on the main body part, and the first elastic part elastically abuts against one side of the signal processing part departing away from the power supply part.

15. The power supply device according to claim 14, wherein one side of the main body part facing the power supply part is provided with an avoidance groove, and the avoidance groove is configured to avoid the signal processing part.

16. The power supply device according to any one of claims 12-15, wherein the power supply device is provided with a busbar component, and a limiting step is formed at a connection position of the main body part and the end parts, wherein the limiting step is configured to abut against an edge of the busbar component.

17. The power supply device according to any one of claims 12-16, wherein the power supply device is provided with a busbar component, and the support frame further comprises a second elastic part, wherein the second elastic part is arranged on the end parts to elastically abut against the busbar component.

18. The power supply device according to any one of claims 12-17, wherein the power supply device is provided with a busbar component, wherein the power supply device further comprises:
an insulating plate, arranged on a surface of the power supply part, wherein
the end parts of the support frame are inserted between the busbar component and the insulating plate,
wherein the end parts are provided with a positioning hole, and a protrusion is formed on a surface of the insulating plate, wherein the protrusion is inserted into the positioning hole to fix the support frame between the busbar component and the insulating plate.

19. A power consumption device, comprising the power supply device according to any one of claims 1-18, wherein the power supply device is configured to provide an electrical energy.
